# EUROPÄISCHE PATENTANMELDUNG

(11) **EP 4 079 565 A1**
(43) Veröffentlichungstag der Anmeldung: **26.10.2022**
(21) Anmeldenummer: 22165852.9
(22) Anmeldetag: 31.03.2022
(51) Int. Cl.: B60L 50/53

(54) **BETREIBEN UND HERSTELLEN EINES SCHIENENFAHRZEUGS, DAS AN EINEM ABSTELLORT ABGESTELLT WIRD**

(30) Priorität: 01.04.2021 DE 102021203364
(71) Anmelder: Bombardier Transportation GmbH, 10785 Berlin (DE)
(72) Erfinder: Buschbeck, Jan, 12109 Berlin (DE); Krischer, Hans, 14055 Berlin (DE); Falk, Thomas, 16761 Henningsdorf (DE); Dzialek, Jan, 16761 Hennigsdorf (DE)
(74) Vertreter: Brunotte, Joachim Wilhelm Eberhard

(57) **Zusammenfassung**

Die Erfindung betrifft ein Verfahren zum Betreiben eines Schienenfahrzeugs (1). Das Schienenfahrzeug (1) fährt zunächst auf einer ersten Fahrstrecke (10) mit elektrischer Fahrleitung. Dann fährt das Schienenfahrzeug (1) über eine zweite Fahrstrecke (11) ohne elektrische Fahrleitung zu einem Abstellort (12) und es wird dabei Energie aus einem Energiespeicher des Schienenfahrzeugs (1) entnommen. An dem Abstellort (12) wird das Schienenfahrzeug (1) von einer Energieversorgung (9) über einen elektrischen Anschluss mit elektrischer Energie versorgt, wobei zunächst der Energiespeicher zumindest teilweise wieder aufgeladen wird und später zumindest ein Teil der zur Verfügung stehenden elektrischen Leistung für eine Heizung zumindest eines Innenraumes und/oder von Einrichtungen des Schienenfahrzeugs (1) zur Aufrechterhaltung einer Mindesttemperatur genutzt wird. Bevor das Schienenfahrzeug (1) bei Wiederaufnahme eines Fahrbetriebs wieder eine Fahrstrecke mit elektrischer Fahrleitung erreicht, wird durch Nutzung des elektrischen Anschlusses am Abstellort (12) und auch von Energie aus dem Energiespeicher eine Betriebstemperatur des zumindest einen Innenraumes des Schienenfahrzeugs (1) eingestellt.

## Beschreibung

Die Erfindung betrifft ein Verfahren zum Betreiben eines Schienenfahrzeugs, das an einem Abstellort abgestellt wird. Die Erfindung betrifft ferner ein Verfahren zum Herstellen eines Schienenfahrzeugs.

Bisher werden herkömmliche Schienenfahrzeuge mit Dieselmotor-Antrieb verwendet, wenn ein Fahrbetrieb zumindest zeitweise auf Fahrstrecken ohne Oberleitung oder Stromschiene (d.h. ohne elektrische Fahrleitung entlang den Fahrstrecken) stattfinden soll. Wenn solche Schienenfahrzeuge zur vorübergehenden Einstellung des Fahrbetriebes abgestellt werden sollen, befinden sich die Abstellorte daher typischerweise an Fahrstrecken ohne elektrische Leitung zur Versorgung des Schienenfahrzeugs mit elektrischer Energie.

Insbesondere zur Vermeidung von Abgasemissionen sollen Schienenfahrzeuge mit Dieselmotor-Antrieb durch Fahrzeuge mit rein elektrisch versorgtem Antrieb ersetzt werden. Geeignete Schienenfahrzeuge ermöglichen den Betrieb auf Fahrstrecken mit elektrischer Fahrleitung, haben aber Energiespeicher an Bord, die auch den Betrieb auf Fahrstrecken ohne elektrische Fahrleitung mit einer vorgegebenen Reichweite ermöglichen.

Bei dem Schienenfahrzeug gemäß der vorliegenden Erfindung handelt es sich um ein Schienenfahrzeug, welches
- in einem ersten Betriebsmodus während einer Fahrt über einen Stromabnehmer des Schienenfahrzeugs mit elektrischer Energie aus einer entlang der momentanen Fahrstrecke verlaufenden elektrischen Leitung versorgbar ist und
- in einem zweiten Betriebsmodus während einer Fahrt auch zur Fortbewegung des Schienenfahrzeugs mit Energie aus einem Energiespeicher an Bord des Schienenfahrzeugs versorgbar ist.

Wenn ein derartiges Schienenfahrzeug vorübergehend abgestellt werden soll, kann es vorkommen, dass der gewünschte Abstellort traditionell fernab einer Fahrstrecke mit entlang der Fahrstrecke verlaufender elektrischer Leitung zur Versorgung des Schienenfahrzeugs mit elektrischer Energie liegt. Auf dem Weg zu dem Abstellort wird das Schienenfahrzeug daher in dem zweiten Betriebsmodus betrieben.

Zwar haben die Kosten, das Bauvolumen und auch das Gewicht von Energiespeichern, die in Schienenfahrzeugen verbaut werden, in der Vergangenheit nahezu kontinuierlich abgenommen. Dennoch haben Energiespeicher, aus denen auch für die Fortbewegung des Schienenfahrzeugs Energie entnommen werden soll, ein erhebliches Gewicht, benötigen die Energiespeicher einen erheblichen Bauraum und tragen wesentlich zu den Gesamtkosten des Schienenfahrzeugs bei. Es wird daher angestrebt, derartige Energiespeicher hinsichtlich ihrer Energie-Speicherkapazität lediglich so groß auszulegen, wie es erforderlich ist. Die Erfindung betrifft insbesondere Energiespeicher mit Lithium-Ionen-Batterien, wobei jedoch alternativ oder zusätzlich auch andere Typen von Batterien für den Energiespeicher infrage kommen.

Neben der Fortbewegung des Schienenfahrzeugs erfordert auch die Heizung und Kühlung von Innenräumen des Schienenfahrzeugs erhebliche Energie. Dies gilt insbesondere dann, wenn das Schienenfahrzeug über einen längeren Zeitraum hinweg an dem Abstellort abgestellt wird und die Innenräume dann wieder auf eine Betriebstemperatur gebracht werden sollen. Lediglich bei kurzer Abstelldauer ist es energetisch sinnvoll, die Betriebstemperatur der Innenräume während der Abstelldauer kontinuierlich aufrecht zu erhalten.

Heizungs- und Klimaanlagen von Schienenfahrzeugen verfügen in der Regel entweder über elektrisch betriebene, lokale Elemente zur Erzeugung von Wärme bzw. zum Abtransport von Wärme oder über Leitungen, durch die hindurch ein Wärmeträgermedium (d.h. ein Fluid, meist eine Flüssigkeit, mit erheblicher Wärmekapazität) Wärme transportiert. Beispiele für lokale Elemente sind Widerstands-Heizelemente bzw. Peltier-Elemente. Typische Wärmeträgermedien weisen Wasser und/oder Öl auf, in anderen Fällen Gase wie z. B. Luft.

Außer den Innenräumen eines Schienenfahrzeugs sind typischerweise auch diverse Einrichtungen des Schienenfahrzeugs, wie beispielsweise die Energiespeicher selbst, aber auch Einrichtungen mit potentiell einfrierenden, fest werdenden Flüssigkeiten auf einer Mindesttemperatur zu halten. Bei den Flüssigkeiten kann es sich zum Beispiel um Kühlflüssigkeiten zum Kühlen von Einrichtungen handeln oder um Wasser für sanitäre Einrichtungen an Bord. Im Fall von hohen Außentemperaturen am Abstellort (d. h. in der Umgebung des Schienenfahrzeugs am Abstellort) kann es auch erforderlich werden, zu verhindern, dass Einrichtungen des Schienenfahrzeugs eine Maximaltemperatur überschreiten. Zum Beispiel kann sich Kühlgut wie zum Beispiel Lebensmittel an Bord befinden. Auch kann für bestimmte Einrichtungen auch im Ruhemodus eine Maximaltemperatur vorgegeben sein, die zum Beispiel bei Sonneneinstrahlung und hohen Außentemperaturen überschritten werden kann. Aus Komfortgründen ist es insbesondere auch erforderlich, dass Räume für Passagiere während des Betriebes des Schienenfahrzeugs eine vorgegebene Maximaltemperatur nicht überschreiten.

Es ist eine Aufgabe der vorliegenden Erfindung, ein Verfahren zum Betreiben eines Schienenfahrzeugs anzugeben, das es erlaubt, einen Energiespeicher an Bord des Schienenfahrzeugs mit einer geringen Speicherkapazität für Fahrten zu einem Abstellort auf Fahrstrecken ohne elektrische Fahrleitung, für das Abstellen des Schienenfahrzeugs an dem Abstellort über lange Zeiträume, für die Wiederherstellung eines betriebsbereiten Zustandes des Schienenfahrzeugs und für Fahrten von dem Abstellort zu einer Fahrstrecke mit elektrischer Fahrleitung zu nutzen. Ferner ist es eine Aufgabe der vorliegenden Erfindung, ein Verfahren zum Herstellen eines Schienenfahrzeugs anzugeben, durch dessen Ausführung ein Schienenfahrzeug hergestellt wird, welches für das Betriebsverfahren geeignet ist.

Es wird vorgeschlagen, am Abstellort zumindest einen elektrischen Anschluss des Schienenfahrzeugs zu einem am Abstellort zugänglichen elektrischen Versorgungsnetz zu nutzen und am Abstellort sowohl Energie aus dem elektrischen Versorgungsnetz als auch aus einem Energiespeicher an Bord des Schienenfahrzeugs zu nutzen.

Insbesondere wird es ferner zugelassen, dass in dem Schienenfahrzeug am Abstellort Abweichungen von vorgesehenen Betriebstemperaturen auftreten. Dies können insbesondere Betriebstemperaturen von Einrichtungen an Bord des Schienenfahrzeugs sein und/oder Betriebstemperaturen von Innenräumen für Personal (einschließlich des Fahrers), Passagiere und/oder Frachtgut. Wenn vor Wiederbeginn des Fahrbetriebes ausgehend von dem Abstellort Energie für das Wiedererreichen zumindest einer Betriebstemperatur benötigt wird, dann wird vorgeschlagen, dass hierfür sowohl Energie über den zumindest einen elektrischen Anschluss aus dem elektrischen Versorgungsnetz bezogen wird, solange das Fahrzeug noch am Abstellort ist, als auch Energie aus dem Energiespeicher bezogen und genutzt wird. Dabei kann die Energie aus dem Energiespeicher vor dem Verlassen des Abstellorts und/oder während einer Fahrt zu einer Fahrstrecke mit elektrischer Fahrleitung für das Wiedererreichen der Betriebstemperatur genutzt werden. Bei der Betriebstemperatur kann es sich um eine Mindesttemperatur (wenn ein Aufheizen erforderlich ist) oder um eine Höchsttemperatur (wenn ein Abkühlen erforderlich ist) handeln. Alternativ oder zusätzlich kann es sich um eine Temperatur in einem vorgegebenen Bereich von Temperaturen handeln. Die Betriebstemperatur kann für verschiedene Einrichtungen und Innenräume des Schienenfahrzeugs unterschiedlich definiert, d. h. vorgegeben sein.

Die Nutzung sowohl von Energie über den zumindest einen elektrischen Anschluss aus dem elektrischen Versorgungsnetz am Abstellort als auch aus dem Energiespeicher hat den Vorteil, dass die elektrische Versorgungsleistung und insbesondere die maximal nutzbare elektrische Versorgungsleistung über den zumindest einen elektrischen Anschluss geringer sein kann als ohne Nutzung von Energie aus dem Energiespeicher. Daher kann die Anzahl der genutzten elektrischen Anschlüsse und/oder die elektrische Versorgungsleistung und insbesondere die maximal nutzbare elektrische Versorgungsleistung pro elektrischem Anschluss geringer sein. Die elektrische Versorgungsleistung und insbesondere die maximal nutzbare elektrische Versorgungsleistung durch das Anschließen des Schienenfahrzeugs an den zumindest einen elektrischen Anschluss an das elektrische Versorgungsnetz am Abstellort zuzüglich der Versorgungsleistung des Bezugs von Energie aus dem Energiespeicher kann sich insbesondere auf eine vorgegebene Dauer für das Aufheizen bzw. Abkühlen zumindest einer Einrichtung an Bord des Schienenfahrzeugs und/oder zumindest eines Innenraums des Schienenfahrzeugs jeweils ausgehend von einer Mindesttemperatur (im Fall des Wiederaufheizens) oder von einer Maximaltemperatur (im Fall des Wiederabkühlens) beziehen, die während des Abstellens erlaubt ist oder vorkommen kann.

Wenn am Abstellort beispielsweise die Temperatur des Wassers für eine sanitäre Einrichtung an Bord nicht unter 4 Grad Celsius fallen darf und die Betriebstemperatur des Wassers für die Warmwasserversorgung 16 Grad Celsius beträgt, dann wird zum Beispiel für ein Aufheizen innerhalb von 12 Stunden eine der Wärmekapazität des Wassers entsprechende elektrische Heizleistung benötigt. Hinzukommen kann in dem Ausführungsbeispiel die elektrische Heizleistung, die für das Aufheizen zumindest eines Innenraums des Fahrzeugs über denselben Zeitraum von 12 Stunden hinweg ausgehend von einer angenommenen möglichen Außen-Tiefsttemperatur von -20 Grad Celsius auf eine Betriebstemperatur von 20 Grad Celsius benötigt wird.

Dementsprechend kann im Fall eines Bedarfs für das Wiederabkühlen zumindest eines Innenraums des Fahrzeugs diejenige elektrische Kühlleistung benötigt werden, die für das Abkühlen zumindest eines Innenraums des Fahrzeugs zum Beispiel über den Zeitraum von 12 Stunden hinweg ausgehend von einer angenommenen möglichen Außen-Höchsttemperatur von 50 Grad Celsius bis zu einer Betriebstemperatur von 23 Grad Celsius benötigt wird. Auf das Verfahren zum Herstellen des Schienenfahrzeugs, bei dem beispielsweise diese Bedingungen und Temperaturen berücksichtigt werden, wird in allgemeiner Form noch näher eingegangen.

Andererseits kann auch die Speicherkapazität des Energiespeichers an Bord des Schienenfahrzeugs geringer sein als ohne Nutzung des zumindest einen elektrischen Anschlusses am Abstellort.

Bei der Auslegung des Energiespeichers hinsichtlich seiner Speicherkapazität ist ferner zu beachten, dass auch Energie für die Fortbewegung zum Abstellort und vom Abstellort zurück zu einer Fahrstrecke mit elektrischer Fahrleitung benötigt wird. Dabei kann mit einbezogen werden, dass zumindest während eines ersten Zeitraumes ab dem Erreichen des Abstellorts und dem Verbinden des zumindest einen elektrischen Anschlusses mit dem elektrischen Versorgungsnetz Energie mit der zur Verfügung stehenden Versorgungsleistung ganz oder überwiegend für das Wiederaufladen des Energiespeichers genutzt werden kann.

Die über den zumindest einen elektrischen Anschluss zur Verfügung stehende elektrische Leistung reicht insbesondere nicht dafür aus, das Schienenfahrzeug am Abstellort innerhalb von kurzer Zeit unter ungünstigen Umgebungsbedingungen in einen für den erneuten Betrieb auf einer Fahrstrecke mit elektrischer Fahrleitung bereiten Zustand zu bringen. Dies betrifft insbesondere die Betriebstemperaturen von zumindest einem Innenraum und optional auch zumindest einer elektrischen Einrichtung (einer anderen Einrichtung als einer Heizung oder Klimaanlage für Innenräume) in dem Schienenfahrzeug, die für den Fahrbetrieb auf einer Fahrstrecke mit elektrischer Fahrleitung und/oder für den Fahrbetrieb mit Passagieren und/oder Fracht erforderlich sind. In dieser Beschreibung wird zunächst davon ausgegangen, dass ein Fahrbetrieb mit Passagieren und/oder Fracht frühestens nach Rückkehr vom Abstellort zu einer Fahrstrecke mit elektrischer Fahrleitung beginnt. Es ist jedoch auch denkbar, dass ein Fahrbetrieb mit Passagieren und/oder Fracht bereits auf der Fahrstrecke vom Abstellort zu einer Fahrstrecke mit elektrischer Fahrleitung beginnt. Die unten stehenden Ausführungen gelten dann entsprechend und die erforderlichen Betriebstemperaturen müssen dann bereits mit Beginn des Fahrbetriebes mit Passagieren und/oder Fracht erreicht sein.

Insbesondere wird vorgeschlagen: Ein Verfahren zum Betreiben eines Schienenfahrzeugs, wobei
- das Schienenfahrzeug zunächst auf einer ersten Fahrstrecke fährt, über einen Stromabnehmer mit elektrischer Energie aus einer entlang der ersten Fahrstrecke verlaufenden elektrischen Leitung versorgt wird und dabei einen Energiespeicher an Bord des Schienenfahrzeugs auflädt,
- das Schienenfahrzeug bei aufgeladenem Energiespeicher in eine zweite Fahrstrecke einfährt, die zu einem Abstellort führt und entlang der keine elektrische Leitung verläuft, aus der das Schienenfahrzeug über den Stromabnehmer mit elektrischer Energie versorgbar ist,
- das Schienenfahrzeug zur Fortbewegung auf der zweiten Fahrstrecke mit Energie aus dem Energiespeicher versorgt wird, sodass der Energiespeicher zumindest teilweise entladen wird,
- das Schienenfahrzeug den Abstellort erreicht und dort abgestellt wird,
- das Schienenfahrzeug an dem Abstellort über zumindest einen elektrischen Anschluss mit elektrischer Energie versorgt wird, wobei mit dieser elektrischen Energie zunächst der Energiespeicher zumindest teilweise wieder aufgeladen wird und später die für die Aufladung des elektrischen Energiespeichers genutzte elektrische Leistung reduziert wird und zumindest ein Teil der durch Nutzung des zumindest einen elektrischen Anschlusses zur Verfügung stehenden elektrischen Leistung für eine Heizung zumindest eines Innenraumes und/oder von Einrichtungen des Schienenfahrzeugs zur Aufrechterhaltung einer Mindesttemperatur oder für eine Kühlung zumindest eines Innenraums und/oder von Einrichtungen des Schienenfahrzeugs zur Aufrechterhaltung einer Höchsttemperatur genutzt wird,
- bevor das Schienenfahrzeug bei Wiederaufnahme eines Fahrbetriebs von dem Abstellort eine dritte Fahrstrecke mit elektrischer Energieversorgung erreicht, die die erste Fahrstrecke oder eine andere Fahrstrecke sein kann und auf der das Schienenfahrzeug erneut aus einer entlang der dritten Fahrstrecke verlaufenden elektrischen Leitung versorgt wird, die durch Nutzung des zumindest einen elektrischen Anschlusses am Abstellort zur Verfügung stehende elektrische Leistung und auch Energie aus dem Energiespeicher zum Erzielen einer Betriebstemperatur des zumindest einen Innenraumes des Schienenfahrzeugs genutzt werden, und
- das Schienenfahrzeug bei der Fahrt von dem Abstellort zu der dritten Fahrstrecke mit elektrischer Energieversorgung zur Fortbewegung mit Energie aus dem Energiespeicher versorgt wird.

Das Aufladen des Energiespeichers während der Fahrt auf der ersten Strecke erfolgt insbesondere bis zum Erreichen des Ladezustandes 100 %, d. h. der Energiespeicher wird vollständig aufgeladen. Dabei bezieht sich der Ladezustand auf den während des Betriebes des Schienenfahrzeugs zu nutzenden Ladezustand-Bereich des Energiespeichers. Bei manchen Speichertypen wie zum Beispiel Lithium-Ionen-Energiespeichern ist es in diesem Sinne physikalisch möglich, den Speicher auf mehr als 100 % Ladezustand aufzuladen. Dies würde den Energiespeicher jedoch möglicherweise schädigen. Somit ist der Energiespeicher bei Einfahrt des Schienenfahrzeugs in die zweite Fahrstrecke vollständig aufgeladen. Dieser Zustand ist auf einfache Weise erreichbar, da während des ersten Betriebszustandes, d. h. während des Fahrens auf der mit einer elektrischen Fahrleitung versehenen ersten Fahrstrecke, in der Regel über einen langen Zeitraum ausreichend Energie auch für die Aufladung des Speichers zur Verfügung steht.

Da während der Fahrt auf der zweiten Fahrstrecke keine elektrische Fahrleitung zur Verfügung steht, wird zur Fortbewegung des Schienenfahrzeugs auf der zweiten Fahrstrecke Energie aus dem Energiespeicher entnommen und der Energiespeicher erreicht folglich am Abstellort einen teilweise entladenen oder ganz entladenen Ladezustand. Bevorzugt wird, dass der Energiespeicher des Schienenfahrzeugs auf der ersten Fahrstrecke bis zu einem ersten Ladezustand aufgeladen wird, der aufgrund der für die Fortbewegung auf der zweiten Fahrstrecke zu dem Abstellort benötigten Energie zu einem zweiten Ladezustand führt, welcher nicht kleiner als ein vorgegebener Minimum-Ladezustand ist. Es verbleibt somit eine entsprechende Reserve an Energie im Energiespeicher.

Alternativ oder zusätzlich kann der Energiespeicher an dem Abstellort über den zumindest einen elektrischen Anschluss auf einen Ladezustand aufgeladen werden, der einen vorgegebenen Beitrag zum Erzielen der Betriebstemperatur des Innenraums und die Fortbewegung des Schienenfahrzeugs auf der Fahrt von dem Abstellort zu der dritten Fahrstrecke ermöglicht, ohne dadurch einen vorgegebenen Minimum-Ladezustand des Energiespeichers zu unterschreiten. Das Aufladen des Energiespeichers führt daher zu einer Reserve von Energie im Energiespeicher.

Insbesondere kann der Minimum-Ladezustand in einem oder beiden der vorgenannten Fälle so vorgegeben sein, dass noch ausreichend Energie für die Versorgung von Einrichtungen des Schienenfahrzeugs in definierten, vorgegebenen Situationen, insbesondere Notsituationen und/oder unvorhergesehenen Situationen, zur Verfügung steht.

Wenn das Schienenfahrzeug den Abstellort erreicht hat, sind alle oder zumindest einige der Einrichtungen des Schienenfahrzeugs noch im betriebsbereiten Zustand. Auch ist die Temperatur des zumindest einen Innenraums in vielen Fällen noch die Betriebstemperatur. Daher ist in der Regel davon auszugehen, dass für eine Heizung zumindest einer Einrichtung des Schienenfahrzeugs und/oder zumindest eines Innenraums des Schienenfahrzeugs zunächst noch keine oder lediglich eine geringe Heizleistung benötigt wird, um eine Mindesttemperatur aufrechtzuerhalten. Unter der Aufrechterhaltung einer Mindesttemperatur (im Fall eines Heizungsbedarfs) wird verstanden, dass die Temperatur mindestens gleich der Mindesttemperatur ist. Sie kann jedoch zumindest zeitweise auch darüber liegen. Unter der Aufrechterhaltung einer Höchsttemperatur (im Fall eines Kühlbedarfs) wird verstanden, dass die Temperatur höchstens gleich der Höchsttemperatur ist. Sie kann jedoch zeitweise auch darunter liegen. Ab dem Erreichen des Abstellortes und nach Verbindung des zumindest einen elektrischen Anschlusses mit dem elektrischen Versorgungsnetz am Abstellort kann daher über den zumindest einen elektrischen Anschluss bezogene elektrische Leistung zum Aufladen des Energiespeichers genutzt werden.

Im Laufe der Zeit kann es jedoch abhängig von den konkret am Abstellort herrschenden Umgebungsbedingungen dazu kommen, dass für die Aufrechterhaltung der Mindesttemperatur bzw. für die Aufrechterhaltung der Höchsttemperatur elektrische Energie benötigt wird und daher zumindest ein Teil der über den zumindest einen elektrischen Anschluss bezogene elektrische Leistung für die Aufrechterhaltung benötigt wird. In dieser Phase ist es nicht sinnvoll, Energie aus dem Energiespeicher zu entnehmen. Vielmehr wird bevorzugt, dass zwar der Anteil der bezogenen elektrischen Leistung, der für das Aufladen des Energiespeichers eingesetzt wird, mit fortschreitender Zeit zumindest einmal, wiederholt oder kontinuierlich reduziert wird, jedoch auch in dieser Phase noch über den zumindest einen elektrischen Anschluss bezogene Energie bzw. Leistung für die Aufladung des Energiespeichers verwendet wird.

In der Regel besteht frühzeitig Kenntnis darüber, wenn der Fahrbetrieb des Schienenfahrzeugs wiederaufgenommen werden soll. Es verbleibt daher Zeit, bis das Schienenfahrzeug vom Abstellort zu der dritten Fahrstrecke gefahren werden muss, um den Betrieb des Schienenfahrzeugs im ersten Betriebsmodus wiederaufnehmen zu können. In der verbleibenden Zeit wird daher elektrische Leistung, die über den elektrischen Anschluss bezogen wird, dazu genutzt, die Temperatur in dem zumindest einen Innenraum des Schienenfahrzeugs der Betriebstemperatur anzunähern oder auf die Betriebstemperatur zu bringen. In der verbleibenden Zeit, bis die Verbindung des elektrischen Anschlusses zu dem elektrischen Versorgungsnetz am Abstellort getrennt wird, wird vorzugsweise außerdem Energie aus dem Energiespeicher an Bord des Schienenfahrzeugs für die Annäherung der Temperatur an die Betriebstemperatur oder für das Erreichen der Betriebstemperatur in dem Innenraum entnommen. Es ist jedoch auch möglich, dass erst nach der Trennung der Verbindung des elektrischen Anschlusses Energie aus dem Energiespeicher entnommen wird. Wenn die Betriebstemperatur in der verbleibenden Zeit noch nicht erreicht worden ist, wird noch am Abstellort und/oder während der Fahrt zu der dritten Fahrstrecke Energie aus dem Energiespeicher für das Erreichen der Betriebstemperatur in dem Innenraum entnommen und verwendet.

Auf der Fahrt von dem Abstellort zur dritten Fahrstrecke wird ferner Energie aus dem Energiespeicher entnommen, um das Schienenfahrzeug fortzubewegen. Insbesondere handelt es sich bei dem Schienenfahrzeug um ein solches Schienenfahrzeug, das auf Fahrstrecken ohne elektrische Fahrleitung zur Fortbewegung ausschließlich mit Energie aus dem Energiespeicher an Bord des Schienenfahrzeugs versorgt werden kann. Dies betrifft im vorliegenden Fall daher die zweite Fahrstrecke zum Abstellort und die Fahrstrecke zur dritten Fahrstrecke.

Bei der dritten Fahrstrecke kann es sich um die erste Fahrstrecke handeln. In diesem Fall kann das Schienenfahrzeug insbesondere über zweite Fahrstrecke auch zurück zu der ersten bzw. dritten Fahrstrecke gefahren werden. Das Schienenfahrzeug kann jedoch ganz oder teilweise auch über eine andere Fahrstrecke zurück zur ersten bzw. dritten Fahrstrecke gefahren werden. Auch wenn es sich bei der dritten Fahrstrecke nicht um die erste Fahrstrecke handelt, kann das Schienenfahrzeug die zweite Fahrstrecke ganz oder teilweise für die Fahrt zur dritten Fahrstrecke nutzen, oder das Schienenfahrzeug kann in einem anderen Fall über eine andere Fahrstrecke zur dritten Fahrstrecke fahren.

Ferner wird ein Verfahren vorgeschlagen zum Herstellen eines Schienenfahrzeugs, wobei eine Energie-Speicherkapazität eines Energiespeichers an Bord des Schienenfahrzeugs und eine Versorgungsleistung zumindest eines elektrischen Anschlusses des Schienenfahrzeugs zum elektrischen Anschließen des Schienenfahrzeugs an ein elektrisches Versorgungsnetz an einem Abstellort des Schienenfahrzeugs derart ausgelegt werden, dass
- ausgehend von einem Betrieb des Schienenfahrzeugs auf einer ersten Fahrstrecke, bei dem das Schienenfahrzeug über einen Stromabnehmer mit elektrischer Energie aus einer entlang der ersten Fahrstrecke verlaufenden elektrischen Leitung versorgt (d.h. in dem ersten Betriebsmodus betrieben) wird und dabei der Energiespeicher auf einen vorgegebenen Ladezustand aufgeladen wird,
- aus dem Energiespeicher bezogene Energie ausreicht, das Schienenfahrzeug von der ersten Fahrstrecke über eine zweite Fahrstrecke, entlang der keine elektrische Leitung ("elektrische Fahrleitung") zur Versorgung des Schienenfahrzeugs mit elektrischer Energie zur Verfügung steht, zu einem vorgegebenen Abstellort fortzubewegen,
- unter Berücksichtigung der elektrischen Energie, die angesichts der Versorgungsleistung des zumindest einen elektrischen Anschlusses am Abstellort bei vorgegebenen Bedingungen der Umgebung des Abstellortes während eines zu erwartenden ersten Zeitraums einer Veränderung der Temperatur(en) zumindest einer Einrichtung und/oder zumindest eines Innenraums des Schienenfahrzeugs von jeweils einer vorgegebenen Betriebstemperatur bis jeweils zu einer zulässigen Mindesttemperatur oder einer zulässigen Höchsttemperatur an dem Abstellort für ein Aufladen des Energiespeichers mit elektrischer Energie zur Verfügung steht,
- die aus dem Energiespeicher bezogene Energie ausreicht, bevor das Schienenfahrzeug bei Wiederaufnahme eines Fahrbetriebs von dem Abstellort eine dritte Fahrstrecke mit elektrischer Energieversorgung erreicht, die die erste Fahrstrecke oder eine andere Fahrstrecke sein kann und auf der das Schienenfahrzeug aus einer entlang der dritten Fahrstrecke verlaufenden elektrischen Leitung versorgt wird, die zumindest eine Einrichtung und/oder den zumindest einen Innenraum des Schienenfahrzeugs jeweils auf die vorgegebene Betriebstemperatur zu bringen, unter Berücksichtigung der Energie, die dabei auch aufgrund der Versorgungsleistung des zumindest einen elektrischen Anschlusses über einen zweiten Zeitraum vorgegebener Länge vor einem Abkoppeln des zumindest einen Anschlusses von dem elektrischen Versorgungsnetz am Abstellort zur Verfügung steht, und
- die aus dem Energiespeicher bezogene Energie ausreicht, das Schienenfahrzeug bei der Fahrt von dem Abstellort zu der dritten Fahrstrecke zur Fortbewegung mit Energie aus dem Energiespeicher zu versorgen.

Der vorgegebene Ladezustand ist wie oben für eine Ausgestaltung des Betriebsverfahrens erwähnt vorzugsweise der Ladezustand des vollständig aufgeladenen Energiespeichers.

Ferner ist bezüglich der Auslegung der Energie-Speicherkapazität des Energiespeichers an Bord des Schienenfahrzeugs und der Versorgungsleistung des zumindest eines elektrischen Anschlusses Folgendes anzumerken bzw. kann angemerkt werden:
Die aus dem Energiespeicher bezogene Energie reicht aus
- das Schienenfahrzeug auf der zweiten Fahrstrecke zum Abstellort fortzubewegen,
- um die zumindest eine Einrichtung und/oder den zumindest einen Innenraum des Schienenfahrzeugs jeweils auf die vorgegebene Betriebstemperatur zu bringen und
- das Schienenfahrzeug bei der Fahrt von dem Abstellort zu der dritten Fahrstrecke fortzubewegen.

Dabei wird folgende Energie berücksichtigt:
- die Energie, die aufgrund des vorgegebenen Ladezustandes bei einer Fahrt des Schienenfahrzeugs in die zweite Fahrstrecke in dem Energiespeicher gespeichert ist.
- Energie, die während des zu erwartenden ersten Zeitraums am Abstellort über den zumindest einen elektrischen Anschluss bezogen wird und in dem Energiespeicher abgespeichert wird. Dabei kann der zu erwartende erste Zeitraum auch bereits vor der Herstellung der elektrischen Verbindung des zumindest einen elektrischen Anschlusses am Abstellort beginnen. Insbesondere kann die vorgegebene Betriebstemperatur bezüglich zumindest einer Einrichtung des Schienenfahrzeugs und/oder zumindest eines Innenraums des Schienenfahrzeugs bereits vor dem Erreichen des Abstellortes verlassen werden. Zum Beispiel kann ein FahrgastInnenraum bereits dann nicht mehr beheizt werden, wenn das Schienenfahrzeug in die zweite Fahrstrecke einfährt. Die von dem Schienenfahrzeug für das Befahren der zweiten Fahrstrecke benötigte Zeit kann jedoch bei der Auslegung berücksichtigt werden. Wird die Betriebstemperatur bereits vor dem Erreichen des Abstellortes oder vor dem Beginn der elektrischen Energieversorgung am Abstellort über den zumindest einen Anschluss verlassen, dann steht auch abhängig von den vorgegebenen Bedingungen der Umgebung des Abstellortes unter Umständen weniger Energie zum Aufladen des Energiespeichers am Abstellort zur Verfügung.
- Energie, die während des zweiten Zeitraumes vorgegebener Länge über den zumindest einen elektrischen Anschluss bezogen wird und in dem Energiespeicher abgespeichert wird. Der zweite Zeitraum kann insbesondere so vorgegeben werden, dass er der kürzeste mögliche Zeitraum ist, der ab Erhalt einer Nachricht über die bevorstehende Wiederaufnahme des Fahrbetriebes des Schienenfahrzeugs bis zum Abkoppeln des zumindest einen elektrischen Anschlusses zur Verfügung steht.

Zu den vorgegebenen Bedingungen der Umgebung des Abstellortes gehört die Außentemperatur und gehören optional eine Einstrahlung von Sonnenenergie auf das Schienenfahrzeug und/oder eine Windgeschwindigkeit am Abstellort. Insbesondere werden bezüglich des Energiebedarfs und der Aufladung des Energiespeichers am Abstellort besonders ungünstige Bedingungen vorgegeben, damit die Auslegung insbesondere zuverlässig zur Eignung des Schienenfahrzeugs für die Ausführung des Betriebsverfahrens führt.

Optional kann auch Energie berücksichtigt werden, die gegebenenfalls und abhängig von den vorgegebenen Bedingungen ab dem Ende des zu erwartenden ersten Zeitraums bis zum Beginn des zweiten Zeitraumes vorgegebener Länge in den Energiespeicher eingespeichert wird und die insbesondere als stationäre Phase bezeichnet werden kann. In dieser Phase bzw. in diesem Zeitraum wird Energie aufgewendet, um jeweils die Mindesttemperatur bzw. jeweils die Höchsttemperatur aufrechtzuerhalten. Ob eine solche Phase zu berücksichtigen ist, hängt auch davon ab, wie lang die Mindest-Verweildauer des Schienenfahrzeugs am Abstellort ist. Unter Umständen reicht die Mindest-Verweildauer nicht für das Zustandekommen einer stationären Phase aus. Auch wenn unter vielen tatsächlich vorkommenden Bedingungen der Umgebung des Abstellortes eine stationäre Phase zustande kommt, ist die stationäre Phase dann nicht bezüglich einer Einspeicherung von Energie in den Energiespeicher zu berücksichtigen. Insbesondere wird dabei auch davon ausgegangen, dass bei den vorgegebenen Bedingungen für die Umgebung die über den zumindest einen elektrischen Anschluss bezogene elektrische Leistung zumindest für die Aufrechterhaltung der Mindesttemperatur bzw. der Höchsttemperatur ausreicht und hierfür keine Energie aus dem Energiespeicher entnommen werden muss. Andernfalls, wenn während einer stationären Phase eine Entnahme von Energie aus dem Energiespeicher zur Aufrechterhaltung jeweils der Mindesttemperatur bzw. jeweils der Höchsttemperatur erforderlich ist, ist dies bei der Auslegung mit zu berücksichtigen.

Insbesondere wird für die stationäre Phase unter Berücksichtigung von elektrischer Energie, die gemäß der Versorgungsleistung des zumindest einen elektrischen Anschlusses am Abstellort abhängig von den vorgegebenen Bedingungen für eine Aufrechterhaltung jeweils der Mindesttemperatur oder jeweils der Höchsttemperatur zur Verfügung steht, die für die Aufladung des elektrischen Energiespeichers zur Verfügung stehende elektrische Energie ermittelt. Letztere Energie ist negativ, wenn die über den zumindest einen elektrischen Anschluss zur Verfügung stehende Versorgungsleistung nicht für die Aufrechterhaltung ausreicht.

Ausführungsbeispiele der Erfindung werden nun unter Bezugnahme auf die beigefügte Zeichnung beschrieben. Die einzelnen Figuren der Zeichnung zeigen:

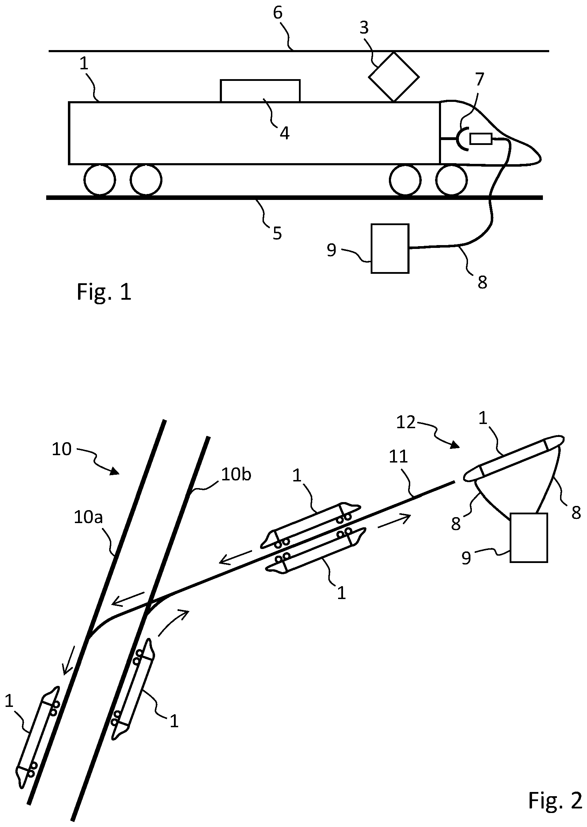

- Fig. 1: schematisch ein Schienenfahrzeug mit einem Stromabnehmer, einem Energiespeicher und einem elektrischen Anschluss zur Herstellung einer elektrischen Verbindung mit einer Energieversorgung an einem Abstellort,
- Fig. 2: schematisch eine zweigleisige Fahrstrecke mit elektrischer Fahrleitung und eine Fahrstrecke ohne elektrische Fahrleitung, die zu einem Abstellort führt, wobei Fahrten eines Schienenfahrzeugs von der zweigleisigen Fahrstrecke zu dem Abstellort und zurück zu der zweigleisigen Fahrstrecke durch Pfeile angedeutet sind,

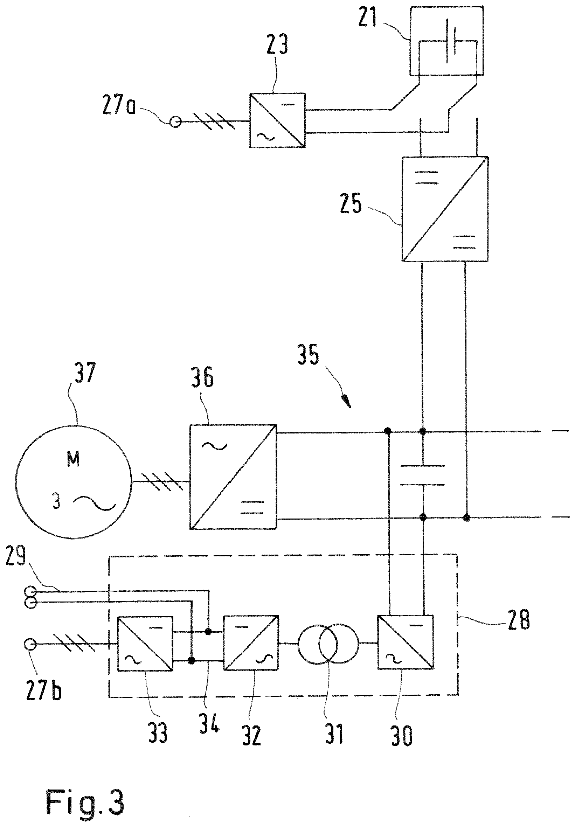

- Fig. 3: ein erstes Ausführungsbeispiel einer elektrischen Schaltungsanordnung an Bord eines Schienenfahrzeugs, die zwei elektrische Anschlüsse zur Herstellung einer elektrischen Verbindung mit einer Energieversorgung an einem Abstellort aufweist,

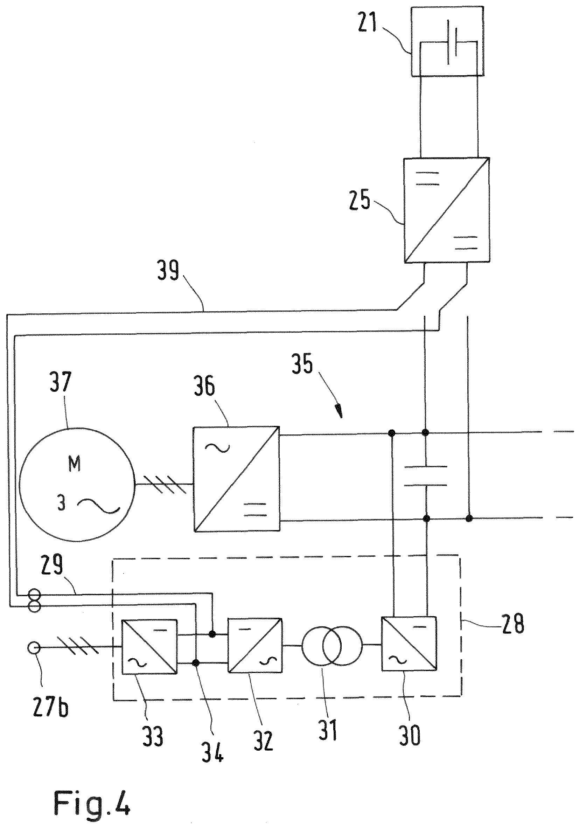

- Fig. 4: ein zweites Ausführungsbeispiel einer elektrischen Schaltungsanordnung an Bord eines Schienenfahrzeugs, die einen elektrischen Anschluss zur Herstellung einer elektrischen Verbindung mit einer Energieversorgung und eine gegenüber dem ersten Ausführungsbeispiel zusätzliche elektrische Ladeverbindung aufweist, und

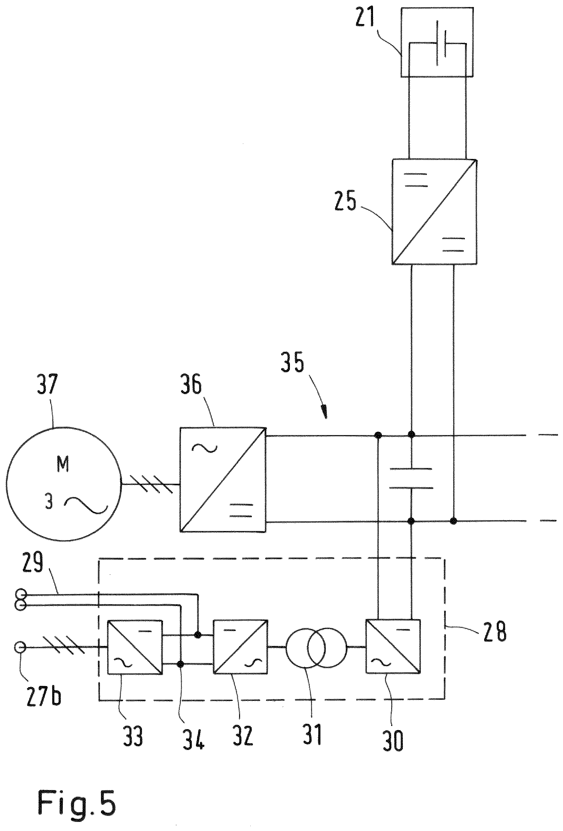

- Fig. 5: ein drittes Ausführungsbeispiel einer elektrischen Schaltungsanordnung an Bord eines Schienenfahrzeugs, die einen elektrischen Anschluss zur Herstellung einer elektrischen Verbindung mit einer Energieversorgung und bidirektionale Stromrichter zur Einspeisung elektrischer Energie aus der Energieversorgung in einen Haupt-Gleichspannungszwischenkreises aufweist.

Fig. 1 zeigt ein Schienenfahrzeug 1, das einen Stromabnehmer 3 und einen Energiespeicher 4 aufweist. Über den Stromabnehmer 3 kann das Schienenfahrzeug 1 bei Kontakt zu einer elektrischen Fahrleitung 6 Energie insbesondere zur Fortbewegung, aber auch zum Betrieb von zahlreichen weiteren elektrischen Einrichtungen (in Fig. 1 dargestellt) an Bord des Schienenfahrzeugs 1 bezogen werden. Ferner kann das Schienenfahrzeug 1 für die Fortbewegung und auch zur Versorgung der weiteren elektrischen Einrichtungen Energie aus dem Energiespeicher 4 beziehen. Temporär ist daher auch ein Betrieb des Schienenfahrzeugs 1 auf Fahrstrecken ohne elektrische Fahrleitung möglich. Außerdem weist das Schienenfahrzeug 1 einen elektrischen Anschluss 7 auf, über den das Schienenfahrzeug 1 von einer elektrischen Energieversorgung an einem Abstellort mit elektrischer Energie versorgt werden kann, zum Beispiel über das schematisch dargestellte Anschlusskabel 8.

In dem Ausführungsbeispiel, aber auch in anderen Fällen, kann es sich bei der Energieversorgung um eine dreiphasige Energieversorgung mit einer Nominalspannung von 400 Volt handeln. Die Nennleistung kann zum Beispiel zumindest 20 Kilowatt und vorzugsweise zumindest 40 Kilowatt betragen.

Anders als in Fig. 1 dargestellt kann das Schienenfahrzeug über mehr als einen elektrischen Anschluss für eine elektrische Verbindung zu der Energieversorgung am Abstellort aufweisen. Zum Beispiel können zwei elektrische Anschlüsse vorhanden sein, an den entgegengesetzten Enden des Schienenfahrzeugs je einer im Bereich eines Triebkopfes oder im Bereich eines Fahrerstandes.

In Fig. 1 ist schematisch dargestellt, dass sich der Energiespeicher 4 auf dem Dach des Schienenfahrzeugs 1 befinden kann. Dies ist lediglich ein Ausführungsbeispiel. Der Energiespeicher kann sich alternativ oder zusätzlich in anderen Bereichen des Schienenfahrzeugs befinden. Es kann sich auch um einen verteilten Energiespeicher handeln, der zum Beispiel mehrere Batterien auf dem Dach und/oder in anderen Bereichen aufweist.

Die Energieversorgung 9 am Abstellort ist in Fig. 1 schematisch angedeutet, obwohl in Fig. 1 auch ein Gleis 5 dargestellt ist, entlang dem die elektrische Fahrleitung 6 verläuft. Die Darstellung der Fig. 1 dient lediglich der Übersicht über Möglichkeiten der Versorgung des Schienenfahrzeugs mit elektrischer Energie. Die Erfindung betrifft den Fall, dass die Fahrstrecke zu einem Abstellort nicht mit einer elektrischen Fahrleitung versehen ist. Derartige Fahrstrecken zu einem Abstellort können zum Beispiel durch Landschaften außerhalb von Ortschaften und/oder durch Ortschaften führen. Alternativ oder zusätzlich können lediglich Fahrstrecken auf einem Betriebsgelände eines Betreibers von Schienenfahrzeugen nicht mit einer Fahrleitung ausgestattet sein. In letzterem Fall muss die Speicherkapazität des Energiespeichers an Bord des Schienenfahrzeugs jedenfalls für den Betrieb des Schienenfahrzeugs auf der Fahrt zum Abstellort, am Abstellort und auf der Fahrt zurück vom Abstellort zu einer Fahrstrecke mit elektrischer Fahrleitung nicht hoch dimensioniert werden, oder die Fahrt zum Abstellort kann mit einem geringen Ladezustand des Energiespeichers beginnen. Die Erfindung ermöglicht aber insbesondere längere Fahrten zu einem Abstellort und/oder lange Abstelldauern.

Ausführungsbeispiele für das Verfahren zum Betreiben eines Schienenfahrzeugs, das an einem Abstellort abgestellt wird, werden nun unter Bezugnahme auf Fig. 2 beschrieben. Fig. 2 zeigt schematisch in einer Draufsicht eine erste Fahrstrecke 10 mit einer elektrischen Fahrleitung (nicht dargestellt). Die erste Fahrstrecke 10 weist ein erstes Gleis 10a und ein zweites Gleis 10b auf, sodass insbesondere Schienenverkehr gleichzeitig in entgegengesetzte Richtungen möglich ist. Von der ersten Fahrstrecke 10 zweigt eine zweite Fahrstrecke 11 ohne elektrische Fahrleitung ab, die zu einem Abstellort 12 führt. An dem Abstellort 12 befindet sich eine elektrische Energieversorgung 9, bei der sich wie auch bezüglich anderer Ausführungsformen des Betriebsverfahrens zum Beispiel um ein ortsfestes Energieversorgungsnetz oder um eine lokale Energieversorgung mit elektrischem Generator handeln kann.

In Fig. 2 sind ferner verschiedene Phasen des Fahrbetriebes eines Schienenfahrzeugs 1 durch Pfeile und schematische Darstellungen des Schienenfahrzeugs 1 dargestellt. Außerdem ist das Schienenfahrzeug 1 schematisch in Draufsicht am Abstellort 12 dargestellt. Das Schienenfahrzeug 1 biegt zunächst von der ersten Fahrstrecke 10 ab auf die zweite Fahrstrecke 11 und fährt zum Abstellort 12, wo es über eine Abstelldauer hinweg abgestellt wird. Am Abstellort 12 wird das Schienenfahrzeug über (in diesem speziellen Ausführungsbeispiel) zwei Anschlusskabel 8 mit der Energieversorgung 9 verbunden. Zum Beispiel befindet sich an den entgegengesetzten Enden des Schienenfahrzeugs 1 jeweils ein elektrischer Anschluss (nicht dargestellt) des Schienenfahrzeugs 1.

Vorzugsweise wird der Energiespeicher an Bord des Schienenfahrzeugs 1 vollständig aufgeladen, solange das Schienenfahrzeug 1 noch auf der 1. Fahrstrecke 10 fährt. Hierzu wird die aus der elektrischen Fahrleitung der ersten Fahrstrecke 10 bezogene elektrische Energie verwendet. Mit Einfahrt in die zweite Fahrstrecke wird dann Energie aus dem Energiespeicher auch für die Fortbewegung des Schienenfahrzeugs 1 entnommen.

Mit dem Erreichen des Abstellortes 12 und nach Anschluss des Schienenfahrzeugs 1 an die Energieversorgung 9 endet die Entnahme von Energie aus dem Energiespeicher. Vielmehr wird dann mit dem Wiederaufladen des Energiespeichers begonnen. In der ersten zeitlichen Phase nach dem Anschluss des Schienenfahrzeugs 1 an die Energieversorgung 9 sind die Temperaturen in den Innenräumen des Schienenfahrzeugs und von Einrichtungen des Schienenfahrzeugs 1 noch nahe bei den Betriebstemperaturen, die während des Fahrbetriebes des Schienenfahrzeugs 1 herrschen. Mindesttemperaturen, die nicht unterschritten werden dürfen, und/oder etwaig vorhandene Höchsttemperaturen, die nicht überschritten werden dürfen, werden in dieser ersten zeitlichen Phase noch nicht erreicht. Insbesondere kann daher in dieser ersten zeitlichen Phase die gesamte über die Energieversorgung 9 zur Verfügung stehende elektrische Leistung zur Aufladung des Energiespeichers genutzt werden. Auch wenn nicht bevorzugt, könnte alternativ in dieser ersten zeitlichen Phase bereits stufenweise oder kontinuierlich damit begonnen werden, das Erreichen der jeweiligen Mindesttemperatur oder der jeweiligen Höchsttemperaturen hinauszuzögern, indem mit elektrischer Energie aus der Energieversorgung 9 geheizt wird bzw. gekühlt wird. In diesem Fall würde die für die Aufladung des Energiespeichers genutzte elektrische Leistung reduziert werden.

Generell, nicht nur bezogen auf die hier beschriebenen Ausführungsbeispiele sind in allen Fällen, insbesondere auch bei der Auslegung der Speicherkapazität des Energiespeichers und bei Auslegung der über den zumindest einen elektrischen Anschluss an Abstellort beziehbar waren elektrischen Versorgungsleistung, Konversionsverluste zu berücksichtigen, die beim Aufladen und Entladen des Energiespeichers entstehen. Auch ist die Selbstentladung des Energiespeichers im Laufe der Zeit zu berücksichtigen. Insbesondere kann die zum Aufladen des Energiespeichers eingesetzte elektrische Energie nicht vollständig wieder aus dem Energiespeicher entnommen werden.

Abhängig von den Umgebungsbedingungen am Abstellort kann es in einer zweiten zeitlichen Phase nach Beginn der dem Anschluss des Schienenfahrzeugs 1 an die Energieversorgung 9 erforderlich werden, elektrische Energie bzw. elektrische Leistung für die Aufrechterhaltung der jeweiligen Mindesttemperatur bzw. jeweiligen Höchsttemperaturen aufzuwenden. Vorzugsweise wird hierfür zunächst die elektrische Leistung aus der Energieversorgung 9 aufgewendet. Lediglich dann, wenn diese elektrische Leistung nicht ausreichen sollte, wird Leistung aus dem Energiespeicher aufgewendet. Dabei ist darauf zu achten, dass in dem Energiespeicher noch ausreichend Energie für die Rückfahrt des Schienenfahrzeugs 1 zu einer Fahrstrecke mit elektrischer Fahrleitung verbleibt. Wenn eine solche zweite zeitliche Phase stattfindet, wird die in der ersten zeitlichen Phase anfangs aus der Energieversorgung 9 aufgebrachte elektrische Leistung zur Aufladung des Energiespeichers spätestens in der zweiten zeitlichen Phase reduziert.

Insbesondere ist nicht nur bei diesem Ausführungsbeispiel eine Mindesttemperatur des Energiespeichers aufrecht zu erhalten. Insbesondere handelsübliche Lithium-Ionen-Energiespeicher sind bei zu geringen Temperaturen nicht oder nicht vollständig betriebsbereit, werden insbesondere bezüglich ihrer Speicherkapazität dauerhaft geschädigt und/oder es findet eine erhöhte Selbstentladung statt. Um die Mindesttemperatur zu erhalten bestehen mehrere Möglichkeiten, die auch miteinander kombiniert werden können. Zum einen kann eine mit dem Energiespeicher kombinierte elektrische Heizung betrieben werden. Zum anderen kann elektrischer Energie bei geringer Entladeleistung entnommen werden. Auch die Aufladung des Energiespeichers trägt mindestens zu einer Erhaltung der Mindesttemperatur bei.

Insbesondere befindet sich nicht nur bei dem hier beschriebenen Ausführungsbeispiel an Bord des Schienenfahrzeugs eine Steuerung zum Steuern der Energieflüsse an Bord des Schienenfahrzeugs. Die Funktionen und mögliche Ausführungsformen einer solchen Steuerung sind an sich bekannt, da auch bisher bereits die Beladung und Entladung von Energiespeichern an Bord von Schienenfahrzeugen sowie die Heizung und/oder Kühlung von Einrichtungen und Innenräumen von Schienenfahrzeugen gesteuert werden. Derartige Steuerungen sind jedoch an die in dieser Beschreibung beschriebenen Verfahrensweisen angepasst. Insbesondere weist eine derartige Steuerung eine zum Beispiel durch Computersoftware implementierte Logik auf, die die Steuerung ausführt.

Vor oder zu Beginn einer weiteren zeitlichen Phase wird von einer derartigen Steuerung des Schienenfahrzeugs das Signal empfangen, dass das Schienenfahrzeug zu einem Zeitpunkt in der Zukunft den Abstellort wieder verlassen soll und/oder zu einem Zeitpunkt in der Zukunft wieder auf einer Fahrstrecke betrieben werden soll, die über eine elektrische Fahrleitung verfügt. Die Steuerung steuert in der weiteren zeitlichen Phase den Energiefluss bzw. stellt elektrische Leistungen ein, die dazu führen, dass die erforderlichen Betriebstemperaturen wieder erreicht werden. Dabei kann es sich insbesondere um die Betriebstemperatur von zumindest einem Innenraum des Schienenfahrzeugs 1 und/oder zumindest einer Einrichtung des Schienenfahrzeugs handeln.

Um insgesamt sparsam mit der zur Verfügung stehenden Energie umzugehen, wird der für die das Erreichen der Betriebstemperatur(en) genutzte Zeitraum kurz gehalten.

Dadurch erreicht zum Beispiel im Winter der zumindest eine Innenraum (etwa ein Fahrgast -Innenraum) erst wieder kurz vor dem Passagierbetrieb die Mindesttemperatur und verliert während der weiteren zeitlichen Phase verhältnismäßig wenig Energie an die Umgebung des Schienenfahrzeugs. Andererseits wird für die kurzfristige Veränderung von Temperaturen eine hohe elektrische Leistung benötigt. Auch aus diesem Grund ist es von Vorteil, dass während dieser weiteren zeitlichen Phase (nicht nur in dem hier beschriebenen Ausführungsbeispiel) auch elektrische Energie aus dem Energiespeicher für das Erreichen der Betriebstemperatur(en) aufgewendet wird. Dies wurde insbesondere dadurch ermöglicht, dass in der ersten zeitlichen Phase und optional auch während der zweiten zeitlichen Phase seit Anschluss des Schienenfahrzeugs 1 an die Energieversorgung 9 am Abstellort 12 der Energiespeicher ganz oder teilweise wieder aufgeladen wurde.

Nach dem Trennen der Verbindung des zumindest einen elektrischen Anschlusses des Schienenfahrzeugs 1 zu der Energieversorgung 9 fährt das Schienenfahrzeug 1 in dem hier beschriebenen Ausführungsbeispiel über die zweite Fahrstrecke zurück zu der ersten Fahrstrecke. Selbstverständlich sind das hier beschriebene Ausführungsbeispiel und die hier beschriebenen Varianten nicht auf die in von Fig. 2 dargestellte Verfahrensweise beschränkt. Vielmehr kann das Fahrzeug alternativ zum Beispiel ganz oder teilweise über eine andere als die zweite Fahrstrecke zu einer dritten Fahrstrecke gefahren werden, die über eine elektrische Fahrleitung verfügt.

Zum Beispiel wird wie folgt verfahren: Wenn das Schienenfahrzeug 1 in die zweite Fahrstrecke 11 einfährt, ist der Energiespeicher vollständig aufgeladen. Der Energiespeicher ist hinsichtlich seiner Speicherkapazität so ausgelegt, dass für die Fortbewegung und den Betrieb des Schienenfahrzeugs auf der zweiten Fahrstrecke 11 bis zum Abstellort maximal vierzig Prozent der gesamten Speicherkapazität aufgewendet werden müssen, sodass der Ladezustand bei mindestens 60 Prozent liegt. Ferner ist die über den zumindest einen Anschluss des Schienenfahrzeugs an dem Abstellort verfügbare elektrische Leistung für die Einspeisung von Energie in das Schienenfahrzeug so ausgelegt, dass der Energiespeicher bei vorgegebenen Bedingungen der Umgebung des Abstellortes mindestens um 20 Prozent der gesamten Speicherkapazität auf mindestens 80 Prozent Ladezustand aufgeladen werden kann. Ferner ist dabei berücksichtigt, dass für das Erreichen der erforderlichen Betriebstemperaturen für den erneuten Betrieb des Schienenfahrzeugs auf einer Fahrstrecke mit elektrischer Fahrleitung maximal 20 Prozent der gesamten Speicherkapazität aufgewendet werden muss, sodass für die Fahrt des Schienenfahrzeugs von dem Abstellort zu einer solchen Fahrstrecke mindestens 40 Prozent der gesamten Speicherkapazität zur Verfügung stehen und der Ladezustand noch mindestens 20 Prozent beträgt. Ein solcher verbleibender Ladezustand von mindestens 20 Prozent berücksichtigt, dass unvorhergesehene Situationen und Notfallsituationen (einschließlich Verzögerungen des Betriebes) während der gesamten Zeit von dem Verlassen der ersten Fahrstrecke bis zur Rückkehr auf eine Fahrstrecke mit elektrischer Fahrleitung auftreten können und der Energiespeicher nicht vollständig entladen werden sollte. Für die Bewältigung der unvorhergesehenen Situationen und Notfallsituationen sollten daher weniger als 20 Prozent der Speicherkapazität des Energiespeichers aufgewendet werden.

Die in Fig. 3 dargestellte Schaltungsanordnung befindet sich zum Beispiel in dem anhand von Fig. 1 oder Fig. 2 beschriebenen Schienenfahrzeug 1. Oben in der Fig. 3 ist ein Energiespeicher 21 dargestellt, der über einen ersten Stromrichter 23 mit einem ersten elektrischen Anschluss 27a verbunden ist. Über den ersten elektrischen Anschluss 27a und/oder über einen zweiten elektrischen Anschluss 27b kann die Schaltungsanordnung an einem Abstellort des Schienenfahrzeugs mit einer dort vorhandenen Energieversorgung wie zum Beispiel der Energieversorgung 9 aus Fig. 2 verbunden werden. Der erste Stromrichter 23 ist ausgestaltet, den von der Energieversorgung eingespeisten Wechselstrom in Gleichstrom umzuwandeln, welcher zum Aufladen des Energiespeichers 21 dient.

Außerdem ist der Energiespeicher 21 über einen zweiten Stromrichter 25 mit einem Gleichspannungszwischenkreis 35 verbunden, bei dem es sich um einen Haupt-Gleichspannungszwischenkreises handelt. Über eine nicht im Detail dargestellte Schalteinrichtung kann zwischen der Verbindung des Energiespeichers 21 mit dem ersten elektrischen Anschluss 27a und der Verbindung des Energiespeichers 21 mit dem gleich Spannungszwischenkreis 35 umgeschaltet werden. Wenn daher der Energiespeicher 21 über den ersten elektrischen Anschluss 27a aufgeladen wird, dann besteht die entsprechende elektrische Verbindung zu dem Energiespeicher 21. Andernfalls, insbesondere wenn Energie aus dem Energiespeicher 21 für die Traktion des Schienenfahrzeugs oder für den Betrieb anderer Einrichtungen in dem Schienenfahrzeug genutzt wird, dann besteht die entsprechende elektrische Verbindung zu dem gleich Spannungszwischenkreis 35.

Aus dem Gleichspannungszwischenkreises 35 wird über zumindest einen Motorstromrichter 36 zumindest ein Traktionsmotor 37 des Schienenfahrzeugs mit Energie versorgt, wenn Traktion für die Fortbewegung des Schienenfahrzeugs aufzubringen ist. Mit dem Gleichspannungszwischenkreis 35 ist ferner eine Hilfsbetriebe-Versorgung 28 verbunden, über die Hilfsbetriebe an Bord des Schienenfahrzeugs mit elektrischer Energie versorgt werden können und während des Betriebes des Schienenfahrzeugs auch versorgt werden. Die Hilfsbetriebe-Versorgung 28 weist einen dritten Stromrichter 30 auf, von dem zumindest Gleichstrom aus dem Gleichspannungszwischenkreises 35 in Wechselstrom umgerichtet werden kann. Optional kann der dritte Stromrichter 30 auch als Wechselrichter betrieben werden, insbesondere wenn von der Hilfsbetriebe-Versorgung 28 Energie in den Gleichspannungszwischenkreis 35 eingespeist werden soll. Dies kann insbesondere dann der Fall sein, wenn der Energiespeicher 21 über den zweiten elektrischen Anschluss 27b an der Hilfsbetriebe-Versorgung 28 mit elektrischer Energie aus der Energieversorgung am Abstellort aufgeladen werden soll. In diesem Fall können auch der erste elektrische Anschluss 27a und der erste Stromrichter 23 entfallen.

Auf der Wechselstromseite des dritten Stromrichters 30 ist dieser über einen Trenntransformator 31 mit der Wechselstromseite eines vierten Stromrichters 32 verbunden. Auf dessen Gleichstromseite befindet sich ein Hilfsbetriebe-Gleichspannungszwischenkreis 34, an den eine elektrische Verbindung 29 für Gleichstrom zu entsprechend versorgten Hilfsbetrieben angeschlossen ist. Ferner ist an den Hilfsbetriebe-Gleichspannungszwischenkreises 34 ein fünfter Stromrichter 33 angeschlossen, mit dessen Wechselstromseite der zweite elektrische Anschluss 27b verbunden ist. Über den zweiten elektrischen Anschluss 27b kann nicht nur die elektrische Verbindung am Abstellort zu der dortigen Energieversorgung hergestellt werden, sondern kann im Fall von über Wechselstrom versorgten Hilfsbetrieben auch deren Versorgung gewährleistet werden.

An einem Abstellort des Schienenfahrzeugs kann daher über den ersten elektrischen Anschluss 27a und/oder über den zweiten elektrischen Anschluss 27b elektrische Energie in das Schienenfahrzeug eingespeist werden und insbesondere in der zuvor beschriebenen Weise genutzt werden.

Die in Fig. 4 dargestellte Schaltungsanordnung gleicht der in Fig. 3 dargestellten mit folgenden Unterschieden: Der erste elektrische Anschluss 27a und der erste Stromrichter 23 sind nicht vorhanden. Zusätzlich jedoch vorhanden ist eine elektrische Ladeverbindung 39 von dem Hilfsbetriebe-Gleichspannungszwischenkreis 34 zu dem zweiten Stromrichter 25.

Insbesondere kann daher an einem Abstellort durch Einspeisung von elektrischer Energie über den zweiten elektrischen Anschluss 27b, nach Gleichrichtung des als Wechselstrom eingespeisten Stroms durch den fünften Stromrichter 33, über die elektrische Ladeverbindung 39 Energie dem zweiten Stromrichter 25 zugeführt werden. Dieser wandelt das Spannungsniveau, welches typischerweise im Bereich von 700 Volt liegt, auf das Spannungsniveau für die Aufladung des Energiespeichers, welches typischerweise im Bereich von maximal 900 Volt liegt. Da das Spannungsniveau auf der von dem Energiespeicher 21 aus gesehen abgewandten Seite des zweiten Stromrichters 25 im Fall einer Energieentnahme aus dem Energiespeicher 21 höher als bei 900 Volt liegt, typischerweise im Bereich von 1500 Volt, ist eine Schalteinrichtung vorgesehen, durch die die elektrische Verbindung des zweiten Stromrichters 25 umgeschaltet werden kann von der elektrischen Ladeverbindung 39 zu einer Verbindung zu dem Haupt-Gleichspannungszwischenkreis 35 und umgekehrt.

Ein Vorteil der in Fig. 4 dargestellten Schaltungsanordnung liegt darin, dass der dritte Stromrichter 30 und der vierte Stromrichter 32 nicht für die bidirektionale elektrische Leistungsübertragung ausgestaltet sein müssen. Insbesondere der vierte Stromrichter 32 muss daher nicht zwingend über steuerbare elektrische Schalter verfügen, die eine Umrichtung von Strom in Wechselstrom ermöglichen. Gegenüber der in Fig. 3 dargestellten Schaltungsanordnung wird auch lediglich ein einziger elektrischer Anschluss für die Verbindung zu einer Energieversorgung an einem Abstellort benötigt. Die in Fig. 4 dargestellte Schaltungsanordnung (und auch die in Fig. 3 und Fig. 5 dargestellte Schaltungsanordnung) können jedoch mehrfach in dem Schienenfahrzeug vorhanden sein. In diesen Fällen sind die in den Figuren dargestellten elektrischen Anschlüsse 27a und 27b bei jeder der Schaltungsanordnung in vorhanden. Das Schienenfahrzeug verfügt daher für jedes Exemplar der Schaltungsanordnungen über zumindest einen elektrischen Anschluss zur elektrischen Verbindung mit einer Energieversorgung an dem Abstellort.

Die in Fig. 5 dargestellte Schaltungsanordnung gleicht der in Fig. 4 dargestellten mit dem Unterschied, dass die elektrische Ladeverbindung 39 nicht vorhanden ist und der dritte Stromrichter 30 und der vierte Stromrichter 32 für die bidirektionale elektrische Leistungsübertragung ausgestaltet sind.

### Bezugszeichenliste

- 1: Schienenfahrzeug
- 3: Stromabnehmer
- 4: Energiespeicher
- 5: Gleis
- 6: elektrische Fahrleitung
- 7: elektrischer Anschluss
- 8: Anschlusskabel
- 9: Energieversorgung am Abstellort
- 10: erste Fahrstrecke mit elektrischer Fahrleitung
- 10a: erstes Gleis
- 10b: zweites Gleis
- 11: zweite Fahrstrecke ohne elektrische Fahrleitung
- 12: Abstellort
- 21: Energiespeicher
- 23: erster Stromrichter
- 25: zweiter Stromrichter
- 27a: erster elektrischer Anschluss
- 27b: zweiter elektrischer Anschluss
- 28: Hilfsbetriebe-Versorgung
- 29: elektrische Verbindung zu Hilfsbetrieben
- 30: dritter Stromrichter
- 31: Trenntransformator
- 32: vierter Stromrichter
- 33: fünfter Stromrichter
- 34: Hilfsbetriebe-Gleichspannungszwischenkreis
- 35: Haupt-Gleichspannungszwischenkreis
- 36: Motorstromrichter
- 37: Traktionsmotor
- 39: Ladeverbindung

## Patentansprüche

1. Verfahren zum Betreiben eines Schienenfahrzeugs (1), wobei
- das Schienenfahrzeug (1) zunächst auf einer ersten Fahrstrecke (10) fährt, über einen Stromabnehmer (3) mit elektrischer Energie aus einer entlang der ersten Fahrstrecke (10) verlaufenden elektrischen Leitung versorgt wird und dabei einen Energiespeicher (4) an Bord des Schienenfahrzeugs (1) auflädt,
- das Schienenfahrzeug (1) in eine zweite Fahrstrecke (11) einfährt, die zu einem Abstellort (12) führt und entlang der keine elektrische Leitung verläuft, aus der das Schienenfahrzeug (1) über den Stromabnehmer mit elektrischer Energie versorgbar ist,
- das Schienenfahrzeug (1) zur Fortbewegung auf der zweiten Fahrstrecke (11) mit Energie aus dem Energiespeicher (4) versorgt wird,
- das Schienenfahrzeug (1) den Abstellort (12) erreicht und dort abgestellt wird,
- das Schienenfahrzeug (1) an dem Abstellort (12) über zumindest einen elektrischen Anschluss (7; 27a, 27b) mit elektrischer Energie versorgt wird, wobei mit dieser elektrischen Energie zunächst der Energiespeicher (4) zumindest teilweise wieder aufgeladen wird und später eine für die Aufladung des elektrischen Energiespeichers (4) genutzte elektrische Leistung reduziert wird und zumindest ein Teil der durch Nutzung des zumindest einen elektrischen Anschlusses (7; 27a, 27b) zur Verfügung stehenden elektrischen Leistung für eine Heizung zumindest eines Innenraumes und/oder von Einrichtungen des Schienenfahrzeugs (1) zur Aufrechterhaltung einer Mindesttemperatur oder für eine Kühlung zumindest eines Innenraums und/oder von Einrichtungen des Schienenfahrzeugs (1) zur Aufrechterhaltung einer Höchsttemperatur genutzt wird,
- bevor das Schienenfahrzeug (1) bei Wiederaufnahme eines Fahrbetriebs eine dritte Fahrstrecke mit elektrischer Energieversorgung erreicht, die die erste Fahrstrecke (10) oder eine andere Fahrstrecke sein kann und auf der das Schienenfahrzeug (1) aus einer entlang der dritten Fahrstrecke verlaufenden elektrischen Leitung versorgt wird, die durch Nutzung des zumindest einen elektrischen Anschlusses (7; 27a, 27b) am Abstellort (12) zur Verfügung stehende elektrische Leistung und auch Energie aus dem Energiespeicher (4) zum Erzielen einer Betriebstemperatur des zumindest einen Innenraumes des Schienenfahrzeugs (1) genutzt werden, und
- das Schienenfahrzeug bei der Fahrt von dem Abstellort (12) zu der dritten Fahrstrecke zur Fortbewegung mit Energie aus dem Energiespeicher (4) versorgt wird.

2. Verfahren nach Anspruch 1, wobei der Energiespeicher (4) des Schienenfahrzeugs (1) auf der ersten Fahrstrecke (10) bis zu einem ersten Ladezustand aufgeladen wird, der aufgrund der für die Fortbewegung auf der zweiten Fahrstrecke (11) zu dem Abstellort (12) benötigten Energie zu einem zweiten Ladezustand führt, welcher nicht kleiner als ein vorgegebener Minimum-Ladezustand ist.

3. Verfahren nach Anspruch 1 oder 2, wobei der Energiespeicher (4) an dem Abstellort (12) über den zumindest einen elektrischen Anschluss (7; 27a, 27b) auf einen Ladezustand aufgeladen wird, der einen vorgegebenen Beitrag zum Erzielen der Betriebstemperatur des Innenraums und die Fortbewegung des Schienenfahrzeugs (1) auf der Fahrt von dem Abstellort (12) zu der dritten Fahrstrecke ermöglicht, ohne dadurch einen vorgegebenen Minimum-Ladezustand des Energiespeichers (4) zu unterschreiten.

4. Verfahren zum Herstellen eines Schienenfahrzeugs (1), wobei eine Energie-Speicherkapazität eines Energiespeichers (4) an Bord des Schienenfahrzeugs (1) und eine Versorgungsleistung zumindest eines elektrischen Anschlusses (7; 27a, 27b) des Schienenfahrzeugs (1) zum elektrischen Anschließen des Schienenfahrzeugs (1) an ein elektrisches Versorgungsnetz an einem Abstellort (12) des Schienenfahrzeugs (1) derart ausgelegt werden, dass
- ausgehend von einem Betrieb des Schienenfahrzeugs (1) auf einer ersten Fahrstrecke (10), bei dem das Schienenfahrzeug über einen Stromabnehmer mit elektrischer Energie aus einer entlang der ersten Fahrstrecke (10) verlaufenden elektrischen Leitung versorgt wird und dabei der Energiespeicher (4) auf einen vorgegebenen Ladezustand aufgeladen wird,
- aus dem Energiespeicher (4) bezogene Energie ausreicht, das Schienenfahrzeug (1) von der ersten Fahrstrecke (10) über eine zweite Fahrstrecke (11), entlang der keine elektrische Leitung zur Versorgung des Schienenfahrzeugs (1) mit elektrischer Energie zur Verfügung steht, zu einem vorgegebenen Abstellort (12) fortzubewegen,
- unter Berücksichtigung der elektrischen Energie, die angesichts der Versorgungsleistung des zumindest einen elektrischen Anschlusses (7; 27a, 27b) am Abstellort (12) bei vorgegebenen Bedingungen der Umgebung des Abstellortes (12) während eines zu erwartenden ersten Zeitraums einer Veränderung der Temperatur(en) zumindest einer Einrichtung und/oder zumindest eines Innenraums des Schienenfahrzeugs von jeweils einer vorgegebenen Betriebstemperatur bis jeweils zu einer zulässigen Mindesttemperatur oder einer zulässigen Höchsttemperatur an dem Abstellort (12) für ein Aufladen des Energiespeichers (4) mit elektrischer Energie zur Verfügung steht,
- die aus dem Energiespeicher (4) bezogene Energie ausreicht, bevor das Schienenfahrzeug bei Wiederaufnahme eines Fahrbetriebs eine dritte Fahrstrecke mit elektrischer Energieversorgung erreicht, die die erste Fahrstrecke oder eine andere Fahrstrecke sein kann und auf der das Schienenfahrzeug aus einer entlang der dritten Fahrstrecke verlaufenden elektrischen Leitung versorgt wird, die zumindest eine Einrichtung und/oder den zumindest einen Innenraum des Schienenfahrzeugs jeweils auf die vorgegebene Betriebstemperatur zu bringen, unter Berücksichtigung der Energie, die dabei auch aufgrund der Versorgungsleistung des zumindest einen elektrischen Anschlusses (7; 27a, 27b) über einen zweiten Zeitraum vorgegebener Länge vor einem Abkoppeln des zumindest einen Anschlusses (7; 27a, 27b) von dem elektrischen Versorgungsnetz am Abstellort (12) zur Verfügung steht, und
- die aus dem Energiespeicher (4) bezogene Energie ausreicht, das Schienenfahrzeug bei der Fahrt von dem Abstellort (12) zu der dritten Fahrstrecke zur Fortbewegung mit Energie aus dem Energiespeicher (4) zu versorgen.
